Europäisches Patentamt

European Patent Office

Office européen des brevets

(19)

(11) Veröffentlichungsnummer: **0 170 911**
**B1**

(12) **EUROPÄISCHE PATENTSCHRIFT**

(45) Veröffentlichungstag der Patentschrift:
20.09.89

(51) Int. Cl.⁴: **A 01 C 15/04**, A 01 C 7/08,
A 01 M 9/00

(21) Anmeldenummer: **85108510.0**

(22) Anmeldetag: **09.07.85**

(54) Vorrichtung zum Streuen von schüttfähigem Gut, insbesondere Dünger.

(30) Priorität: 07.08.84 DE 3429042

(43) Veröffentlichungstag der Anmeldung:
12.02.86 Patentblatt 86/07

(45) Bekanntmachung des Hinweises auf die Patenterteilung: 20.09.89 Patentblatt 89/38

(84) Benannte Vertragsstaaten:
AT BE CH FR GB IT LI NL SE

(56) Entgegenhaltungen:
DE–A– 2 629 278
FR–A– 2 284 269
FR–A– 2 340 031 ·
FR–A– 2 373 229
FR–A– 2 506 122
US–A– 1 785 945

(73) Patentinhaber: **Rauch Landmaschinenfabrik GmbH**
**Postfach 1107 Landstrasse 14**
**D-7573 Sinzheim (DE)**

(72) Erfinder: **Rauch, Norbert, Dipl.-Ing.**
**Bergseestrasse 49**
**D-7573 Sinzheim (DE)**

(74) Vertreter: **Dr.-Ing. Hans Lichti Dipl.-Ing. Heiner Lichti**
**Dipl.-Phys. Dr. Jost Lempert**
**Postfach 41 07 60 Durlacher Strasse 31**
**D-7500 Karlsruhe 41 (DE)**

**Beschreibung**

Die Erfindung betrifft eine Vorrichtung zum Streuen von schüttfähigem Gut, insbesondere Dünger oder dgl., mit einen auf der Pritsche eines Fahrzeugs, z. B. eines Systemschleppers, eines Selbstfahrers, oder eines Anhängers aufgesattelten Vorratsbehälter und einem von einem Hubgestänge, z. B. einem Dreipunktgestänge, aufgenommenen pneumatischen Streuaggregat, das mehrere, sich beiderseits der Fahrzeuglängsachse und quer zu dieser erstreckende, außen mit unterschiedlichem Abstand von dieser an Verteilerorganen ausmündende und in eine Fahrstellung anklappbare : Streuleitungen aufweist, die innen über je einen Injektor und einen Luftverteiler an wenigstens ein vom Fahrzeug, z. B. einer Zapfwelle, angetriebenes Gebläse angeschlossen sind und denen das Streugut mittels Dosierorganen zugeführt wird.

Vorrichtungen dieser Art (FR-A-2 284 269 und 2 373 229) dienen im landwirtschaftlichen Betrieb vor allem dazu, körnige Dünger oder Granulate großflächig und gleichmäßig zu streuen. Üblicherweise ist das Streuaggregat eine Baueinheit, die aus dem Vorratsbehälter, den unterhalb seiner Auslauföffnungen angeordneten Dosierorganen, dem Gebläse mit den Luftverteilern und den daran anschließenden. Injektoren, die unterhalb der Dosierorgane angeordnet sind, sowie den Streuleitungen besteht. Diese Baueinheit wird von dem Dreipunktgestänge eines Schleppers aufgenommen. Der Antrieb des Gebläses erfolgt über die Zapfwelle des Schleppers, von der aus auch die Dosierorgane angetrieben werden können. Gegebenenfalls können diese aber auch einen eigenen hydraulischen Antrieb, der an das Hydrauliknetz des Schleppers angeschlossen ist, aufweisen.

Bei Geräten dieser Art ist der Streubreite eine Grenze durch folgende Faktoren gesetzt : Je größer die Streubreite ist, um so größer muß das Aufnahmevermögen des Vorratsbehälters sein, um im Fahrgassenverfahren mit einer Füllung bis zum Ende des Schlags zu kommen. Vorteilhafterweise sollte eine Füllung sogar für eine Hin- und Rückfahrt ausreichen, da der Vorratsbehälter im allgemeinen nur an einer Seite des Schlags nachgefüllt werden kann. Der Nutzlast ist aber in mehrfacher Hinsicht eine Grenze gesetzt. Da sich das gesamte Streuaggregat mit Vorratsbehälter und Nutzlast hinter der Hinterachse des Schleppers befinden, ist der Bodendruck der Hinterachse entsprechend groß. Dieser Bodendruck soll aber so gering wie möglich gehalten werden. Bei Überschreiten eines bestimmten Gewichtes wird die Lenkfähigkeit des Schleppers erheblich beeinträchtigt, was bei hängigem Gelände zum Versetzen oder gar Umkippen führen kann. Die Gefahr ist um so größer, je höher der Schwerpunkt des Streuaggregates mit Vorratsbehälter und Nutzlast liegt. Mit anderen Worten : Bei einer Spätdüngung, die mit einem in Hochlage angehobenen Streuaggregat erfolgt, ist der Streubreite eine noch niedrigere Grenze gesetzt. Es kann das Streuaggregat häufig nur gerade so hoch angehoben werden, daß es unmittelbar über der Pflanzung liegt. Durch den hohen Schwerpunkt äußern sich geringe Bodenunebenheiten in Schwankungen der Streuleitungen, die bei großer Länge am Ende eine erhebliche Amplitude aufweisen und zu Flurschäden führen können.

In Erkenntnis der erstgenannten Nachteile werden Streuaggregate auch im Hängerbetrieb eingesetzt (FR-A-23 82 171), wodurch sich zwar die Schwerpunktsituation verbessern läßt, dieser Vorteil jedoch mit anderen gravierenden Nachteilen erkauft wird. Hier ist zuerst die schlechtere Wendigkeit des gesamten Zugs zu nennen. Ferner wird die Bodenbeanspruchung durch die Räder wenigstens einer weiteren Achse vergrößert und aufgrund des größeren Abstandes zwischen Schlepper und Streuaggregat sind aufwendige Antriebsverbindungen erforderlich. Sehr nachteilig ist auch die Tatsache, daß eine Spätdüngung nicht möglich ist, da sich das Streuaggregat nicht anheben läßt. Dies ist im modernen landwirtschaftlichen Betrieb, in dem der für eine Wachstumsperiode notwendige Dünger in mehreren Gaben unter Anpassung an den Bedarf und die Witterung gestreut wird, nicht tragbar.

Es ist beim Hängerbetrieb, aber auch bei direkter Aufsattelung weiterhin bekannt (DE-A-1 940 922), die Streuleitungen vom aufgesattelten Vorratsbehälter zunächst nach hinten und dann über 90-Grad-Umlenkungen zur Seite zu führen. Die Dosierorgane sind quer zur Fahrtrichtung unterhalb des Behälters angeordnet und dadurch für Probedosierungen, Reinigungsarbeiten etc. zumindest im aufgesattelten Zustand nicht zugänglich. Aufgrund der notwendigen Umlenkung des Förderstromes im Bereich der höchsten Fördergeschwindigkeit ist einerseits eine große Gebläseleistung notwendig, andererseits ein starker Verschleiß in den Leitungsbögen sowie entsprechender Abrieb am Produkt gegeben. Auch kommt es vor allem bei feuchtem Dünger leicht zu Anbackungen und schließlich zu Verstopfungen. Damit die Ausleger nicht den Schaukelbewegungen des Fahrzeuges aufgrund von Bodenunebenheiten folgen, können sie zur Vermeidung des Aufschlagens auf den Boden pendelnd aufgehängt sein. Bei diesem Streuaggregat wäre zwar theoretisch eine Höhenverstellung für die Spätdüngung möglich, doch müßten dann die Leitungsbögen folgen können, wodurch sich weitere räumlich versetzte Krümmungen ergeben würden, die die vorgenannten Nachteile noch verstärken.

Das Dokument DE-A-2 629 278 beschreibt eine Vorrichtung mit zwei, nahe der Austragsöffnung eines Behälters angeordneten Injektoren, die zur Auflockerung und zum Transport dienen. Beide Injektoren befinden sich in der gleichen Leitung.

Im modernen Landwirtschaftsbetrieb werden heute häufig statt oder zusätzlich zu Anbauschleppern sogenannte Systemschlepper oder Selbstfahrer eingesetzt, die vielfältige Anbaumöglichkeiten bieten und zur Durchführung von Arbeiten herangezogen werden können, die sich mit dem Schlepper nicht erledigen lassen. So ist es insbesondere bei diesem Fahrzeugtyp aus der Praxis bekannt, auf der Pritsche des Systemschleppers einen Vorratsbehälter großer Nutzlast aufzusatteln und an das Dreipunktgestänge ein übliches pneumatisches Streuaggregat, wie es zuvor im Zusammenhang mit Normalschleppern beschrieben worden ist, anzukoppeln. Der Vorteil dieser den Oberbegriff des Anspuchs 1 bildenden Kombination besteht darin, daß nicht die gesamte Nutzlast vom Dreipunktgestänge aufgenommen werden muß, so daß der Schwerpunkt im Bereich der Hinterachse liegt. Nachteilig ist jedoch, daß der Dünger aus dem aufgesattelten Behälter in den kleineren Vorratsbehälter des Streuaggregates umgefüllt werden muß. Dies kann nur bei auf dem Boden abgelassenem Streuaggregat geschehen. Im Falle der Spätdüngung bedeutet dies, daß das Umfüllen immer nur am Ende eines Schlags erfolgen kann, da andernfalls die Pflanzen beim Ablassen beschädigt würden. Würde man eine größere Nutzlast des Vorratsbehälters am Streuaggregat vorsehen, erzwingt dies eine stabilere Konstruktion desselben und führt dadurch zu einem hohen Leergewicht. Insgesamt wird dadurch der Schwerpunkt wieder in Richtung hinter die Hinterachse verlagert. Im Falle der Spätdüngung mit angehobenem Streuaggregat werden die Schwerpunktverhältnisse besonders ungünstig.

Der Erfindung liegt die Aufgabe zugrunde, eine Vorrichtung des eingangs geschilderten und zuletzt gewürdigten Aufbaus so auszubilden, daß bei maximaler Streubreite und größtmöglicher Nutzlast ein geringeres Leergewicht und eine günstige Lastverteilung bei geringster Bodenbelastung erhalten wird und während des Streubetriebs Umfüllarbeiten oder dgl. entfallen, und daß der Verschleiß an den Transportleitungen und der Abrieb am Produkt minimal gehalten werden kann.

Erfindungsgemäß wird diese Aufgabe dadurch gelöst, daß die Dosierorgane unterhalb von am aufgesattelten Vorratsbehälter vorhandenen Auslauföffnungen angeordnet sind und daß eine der Anzahl der Streuleitungen entsprechende Anzahl von Transportleitungen vorgesehen ist, die jeweils einerseits über einen Injektor unterhalb der Dosierorgane zur Aufnahme des Streugutes und über einen Luftverteiler an ein Gebläse, andererseits an einen Injektor einer Streuleitung angeschlossen sind, wobei den Streuleitungen und den Transportleitungen je ein eigenes Gebläse zugeordnet ist.

Die erfindungsgemäße Lösung besteht in dem Prinzip, den Dosiervorgang an den Vorratsbehälter zu verlagern und das dosierte Streugut vom Vorratsbehälter mittels der Transportleitungen pneumatisch den Injektoren der Streuleitungen zuzuführen. Mit anderen Worten : Der gesamte Inhalt des aufgesattelten Vorratsbehälters, der schwerpunktmäßig günstig auf oder gar vor der Hinterachse sitzt, wird in dosierter Form kontinuierlich dem Streuaggregat zugeführt. Der Inhalt des Behälters reicht im allgemeinen über mehrere Schläge, so daß die Intervalle für das Nachfüllen ausschließlich durch die maximale Nutzlast des aufgesattelten Vorratsbehälters bestimmt werden. Während der Streuarbeit sind keinerlei Umfüllvorgänge notwendig. Durch die Erfindung kann beim Streuaggregat auf einen weiteren Vorratsbehälter verzichtet werden, so daß am Dreipunktgestänge des Fahrzeugs, z. B. des Systemschleppers oder des Selbstfahrers, nur noch das für die Verteilung des Streugutes unbedingt notwendige und damit ein nur geringes Gewicht hängt. Dadurch ergibt sich eine günstige Schwerpunktverteilung, so daß die Lenkfähigkeit in keiner Weise beeinträchtigt wird. Ferner wird das Leergewicht praktisch auf ein Minimum reduziert. Folglich läßt sich die Nutzlast auf einen ausschließlich durch die zulässige Bodenbeanspruchung bzw. die Schleppertragfähigkeit begrenzten Wert erhöhen. Hierdurch und durch die großen Nachfüllintervalle wird gegenüber den bekannten Vorrichtungen die Möglichkeit eröffnet, noch größere Streubreiten, beispielsweise über 18 m, vorzusehen.

Durch das geringere Gewicht am Dreipunktgestänge werden auch die zuvor geschilderten Probleme bei der Spätdüngung verringert, indem auch bei angehobenem Streuaggregat die Schwerpunktverhältnisse nur unwesentlich verschlechtert werden. Die durch Bodenunebenheiten ausgelösten Pendelbewegungen lassen sich erfindungsgemäß durch eine Pendelaufhängung des Streuaggregates vollständig vermeiden.

Die Maßnahme, den Streuleitungen und den Transportleitungen je ein eigenes Gebläse zuzuordnen, empfiehlt sich deshalb, weil die Transportleitungen nur eine kurze Förderstrecke zwischen dem aufgesattelten Vorratsbehälter und dem am Dreipunktgestänge hängenden Streuaggregat überwinden müssen, so daß auch eine nur sehr geringe Gebläseleistung erforderlich ist, da das Streugut bei der Aufgabe in die Streuleitungen keine kinetische Energie mehr besitzen muß, während für den Transport des Streugutes in den Streuleitungen, insbesondere bei großen Streubreiten, eine größere Gebläseleistung notwendig ist, um die am Austritt für die Verteilung notwendige kinetische Energie bereitzustellen. Auch läßt sich bei dieser Ausbildung das den Transportleitungen zugeordnete Gebläse gesondert steuern, beispielsweise mittels einer saugseitig angeordneten Drosselklappe, um die Leistung an die Dosierleistung der Dosierorgane anzupassen bzw. so einzustellen, daß gerade noch ein sicherer Transport des Streugutes erfolgt, wodurch der Verschleiß an den Transportleitungen und der Abrieb am Produkt minimal gehalten werden kann. Auch die Höhenverstellung des Streuaggregates bringt keine Nachteile mit sich, da in den Transportleitungen, die der Höhenbewegung folgen müssen, geringe Luftgeschwindigkeiten vorliegen.

Mit Vorteil weisen beide Gebläse eine gemeinsame Antriebswelle auf, so daß die gesamte

Baugröße minimal gehalten wird und beide Gebläse durch einen Kuppelvorgang beispielsweise an die Zapfwelle angeschlossen werden können. Die Gebläse können entweder auf der Ladepritsche oder aber auf einem Rahmen des Streuaggregates angeordnet sein. Die Anordnung auf dem Streuaggregat hat den Vorteil, daß sie den relativ einfachen Zapfwellenanschluß ermöglicht.

In diesem Fall ist das zweite Gebläse druckseitig über wenigstens eine unterhalb des Vorratsbehälters geführte Luftleitung an die Luftverteiler für die Transportleitungen angeschlossen. Hierbei kann es sich um eine einfache Schlauchleitung handeln.

Gemäß einer weiteren bevorzugten Ausführungsform bildet der Rahmen des Streuaggregates den heb- und senkbaren Teil eines Hubgestells, dessen anderes Teil mit dem Dreipunktgestänge verbunden ist. Diese Ausführungsform ist insbesondere für die Spätdüngung vorgesehen, wenn der Hubbereich des Dreipunktgestänges für die Spätdüngung nicht ausreicht. Das Streuaggregat kann bis zu 2 m angehoben werden, so daß zur aufgewachsenen Frucht der gleiche Abstand wie bei der Bodendüngung eingehalten werden kann.

In einem solchen Fall wird im allgemeinen auch keine direkte Ankopplung der Antriebswelle des Gebläses an die Zapfwelle möglich sein. Es ist deshalb dann, wenn wenigstens eines der beiden Gebläse auf dem den heb- und senkbaren Teil des Hubgestells bildenden Rahmens angeordnet ist, vorgesehen, daß die Antriebswelle dieses Gebläses mit der Zapfwelle über ein längenveränderliches Getriebeteil, z. B. einen mittels seitlichem Federdruck verkürzbaren Riementrieb, verbunden ist. Vorzugsweise jedoch ist das Gebläse bzw. sind beide Gebläse mit dem am Dreipunktgestänge angeordneten Rahmenteil verbunden und über flexible Luftleitungen an die Luftverteiler bzw. Injektoren angeschlossen.

Gemäß einem weiteren Merkmal der Erfindung ist der Rahmen des Streuaggregates bzw. das gegenüber dem Dreipunktgestänge hebbare Teil des Hubgerüstes über ein etwa in der Fahrzeuglängsachse angeordnetes Pendellager mit dem Dreipunktgestänge verbunden, um einen Pendelausgleich auch in jeder Höhenstellung zu ermöglichen.

Ferner kann vorgesehen werden, daß die Streuleitungen jeweils einer Fahrzeugseite, ggf. zusammen mit weiteren ihnen zugeordneten Bauteilen, z. B. den Injektoren, um eine parallel zur Fahrzeuglängsachse verlaufende Achse einstellbar sind, um wegen des Pendelausgleiches auch bei hängigem Gelände eine bodenparallele Anordnung der Streuleitungen, und zwar unabhängig voneinander, zu ermöglichen.

Gemäß einer weiteren vorteilhaften Ausführung bilden der Vorratsbehälter zusammen mit Dosierorganen und den Injektoren eine Baueinheit, während die Transport- und Luftleitungen zusammen mit dem Streuaggregat den Gebläsen und ggf. dem Hubgestell eine weitere Baueinheit bilden. Diese beiden Baueinheiten lassen sich leicht miteinander verbinden und ebenso leicht trennen.

Hierdurch wird der An- und Abbau der Vorrichtung erleichtert. Ferner sind durch Abbau der Transportleitungen die Dosierorgane und Auslauföffnungen leicht zugänglich, so daß Probedosierungen oder Reinigungsarbeiten an den Dosierorganen und Auslauföffnungen behinderungsfrei durchgeführt werden können. Auch ist es möglich, den Vorratsbehälter ausschließlich unter Schwerkraftwirkung — ggf. unter Mitlauf der Dosierorgane — zu entleeren, ohne daß das Streugut über das gesamte pneumatische System ausgetragen werden müßte.

Auch die Luftleitung zwischen dem Gebläse und den Luftverteilern unterhalb des Vorratsbehälters ist mit dem Gebläse leicht lösbar verbunden, um den An- und Abbau des Streuaggregates und die Herstellung bzw. Lösung der pneumatischen Verbindung zwischen Streuaggregat und Vorratsbehälter zu erleichtern.

Mit Vorzug weist der Vorratsbehälter beiderseits der Fahrzeuglängsachse je eine parall zu dieser verlaufende Auslauföffnung auf, unter der jeweils eine Gruppe von Dosierorganen angeordnet ist, die über die Transportleitungen den Streuleitungen jeweils einer Fahrzeugseite zugeordnet sind.

Die Auslauföffnungen und die Dosierorgane sind dabei zweckmäßigerweise in den Bereich der äußeren Seitenbegrenzungen des Vorratsbehälters verlagert, um einerseits eine größtmögliche Nutzlast, andererseits eine gute Zugänglichkeit der Auslauföffnungen bzw. Dosierorgane bei aufgesatteltem Vorratsbehälter — nach Abbau der Transportleitungen — zu erhalten. Auch ist es dadurch möglich, die Luftleitung vom Gebläse etwa in der Fahrzeuglängsachse unterhalb des Vorratsbehälters hineinzuführen und die Luft auf beiderseits der Fahrzeuglängsachse angeordnete Luftverteiler aufzuteilen.

Bei der vorgenannten Ausführungsform empfiehlt es sich, die Transportleitungen in Förderrichtung unmittelbar hinter den Injektoren über gekrümmte Abschnitte in die Flucht hinter dem Vorratsbehälter zu den dort angeordneten Injektoren der Streuleitungen zu führen, um damit die seitliche Ausladung der Transportleitungen gering zu halten und die zulässige Gesamtbreite nicht zu überschreiten. Durch die Rückführung der Transportleitungen in die Flucht hinter dem Vorratsbehälter ist es ferner möglich, die Injektoren relativ weit innen anzuordnen, so daß die Weiterführung des Streugutes in die kurzen Streuleitungen, deren Verteilerorgane etwa in der Flucht des Fahrzeugs liegen, ohne größere Umlenkungen und problemlos möglich ist. Ferner wird durch die Führung der Transportleitungen nach innen seitlich ausreichend Platz geschaffen, um die Streuleitungen des Streuaggregats in die Fahrstellung anzuklappen, ohne daß die zulässige Breite überschritten wird.

Statt der vorgenannten Ausführung ist es auch möglich, daß der Vorratsbehälter eine einzige quer zur Fahrzeuglängsachse verlaufende Auslauföffnung aufweist, unterhalb der sämtliche Dosierorgane hintereinander und quer zur Fahrzeugslängsachse angeordnet sind, wobei die zu einer Fahrzeugseite hin angeordneten Dosierorgane jeweils den zur gleichen Fahrzeugseite angeordneten Streuleitungen zugeordnet sind. Mit Vorteil liegen die Dosierorgane im Bereich der Rückwand des Vorratsbehälters, wo sie leicht zugänglich sind.

Bei dieser Ausführungsform wird das Streugut auch im Bereich der Transportleitungen mit geringstmöglicher Umlenkung gefördert, da es von den Dosierorganen aus zunächst geradlinig transportiert und nur in dem Maß umgelenkt werden muß, wie dies der Niveauunterschied zwischen den Injektoren am Vorratsbehälter und den Injektoren an den Streuleitungen erfordert.

Da sich im Bereich der Transportleitungen gekrümmte Abschnitte nicht vermeiden lassen, bestehen diese vorzugsweise aus flexiblen Schläuchen, die einerseits die Leitungsführung und vor allem den Austausch beschädigter Leitungen erleichtern. Ferner sind solche flexiblen Leitungen gegen Verschleiß durch das in ihnen geförderte Streugut weniger empfindlich als metallische Leitungen und auch kostengünstiger, so daß sich der Ersatzbedarf entsprechend günstig stellt.

Nachstehend ist die Erfindung anhand eines in der Zeichnung dargestellten Ausführungsbeispiels beschrieben. In der Zeichnung zeigen :

Figur 1 eine schematische Seitenansicht eines Systemschleppers mit Streuvorrichtung ;

Figur 2 eine Draufsicht auf die Streuvorrichtung (ohne den Systemschlepper) und

Figur 3 eine Ansicht auf die Streuvorrichtung von hinten.

Auf der Pritsche 1 des Systemschleppers ist ein großvolumiger Vorratsbehälter 2 aufgesattelt, der das Streugut aufnimmt. Der Systemschlepper weist ferner ein Dreipunktgestänge 3 aus zwei Unterlenkern 4 und einem Oberlenker 5 auf, an dem der Rahmen 6 eines Streuaggregates 7 angebracht ist.

Das Streuaggregat 7 besteht in herkömmlicher Weise aus mehreren parallel nebeneinander angeordneten Streuleitungen 8, die sich von der Fahrzeuglängsachse aus in Bündeln nach außen erstrecken und in unterschiedlichem Abstand an Verteilerorganen 9 ausmünden. Diese Verteilerorgane bestehen beispielsweise aus Pralltellern, die vor den nach hinten abgebogenen Öffnungen der Streuleitungen angeordnet sind. Wenigstens eine der Streuleitungen auf beiden Seiten der Fahrzeuglängsachse — beim gezeigten Ausführungsbeispiel die Streuleitung 10 — ist über eine Umlenkung nach innen zur Fahrzeuglängsachse hin geführt, um auch in der Flucht hinter dem Vorratsbehälter 2 bzw. dem Fahrzeug das Streugut zu verteilen.

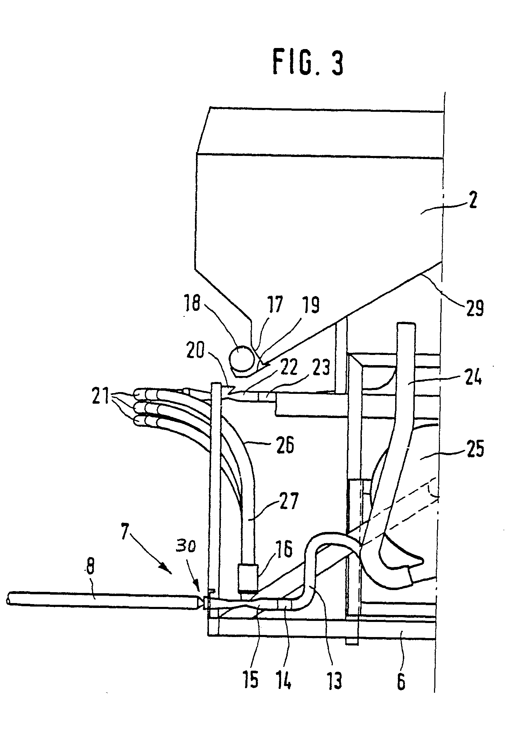

Das Streuaggregat weist ferner ein Gebläse 11 auf, dessen Achse 12 beispielsweise an die Zapfwelle des Systemschleppers angekuppelt wird. Das Gebläse 11 besitzt zwei Druckabgänge 13, die zu Luftverteilern 14 führen, die sich über die gesamte Breite der Streuleitungen 8 erstrecken und die Luft auf die einzelnen Streuleitungen verteilen. Unmittelbar hinter dem Luftverteiler 14 setzen die Streuleitungen 8 mit je einem Injektor 15 (Figur 3) an, oberhalb der ein über sämtliche Leitungen geführter Kasten 16 zur Aufgabe des Streugutes angeordnet ist. Die Streuleitungen 8 sind, wie in Fig. 3 schematisch angedeutet, über Gummimuffen 30 oder dgl. mit den Injektoren verbunden, so daß sie um eine nicht gezeigte Achse nach oben geklappt werden können. Ferner weisen die Streuleitungen 8 mehrere aneinander angelenkte Abschnitte (nicht gezeigt) auf, um die sie gefaltet werden, so daß sie trotz großer Länge mit relativ geringer Höhe zusammengefaltet und nach oben in die Fahrstellung geklappt werden können.

Der auf dem Systemschlepper aufgesattelte Vorratsbehälter 2 weist beiderseits der Fahrzeuglängsachse, jeweils nahe der Seitenbegrenzung des Vorratsbehälters angeordnete Auslauföffnungen 17 auf, in deren Bereich Dosierorgane in Form von achsparallel angeordneten Nockenrädern gelagert sind. Unterhalb der Dosierorgane 18 sind Dosierschalen 19 unter federnder Anlage an den Dosierorganen angeordnet, über die das dosierte Streugut in Auffangschalen 20 gelangt.

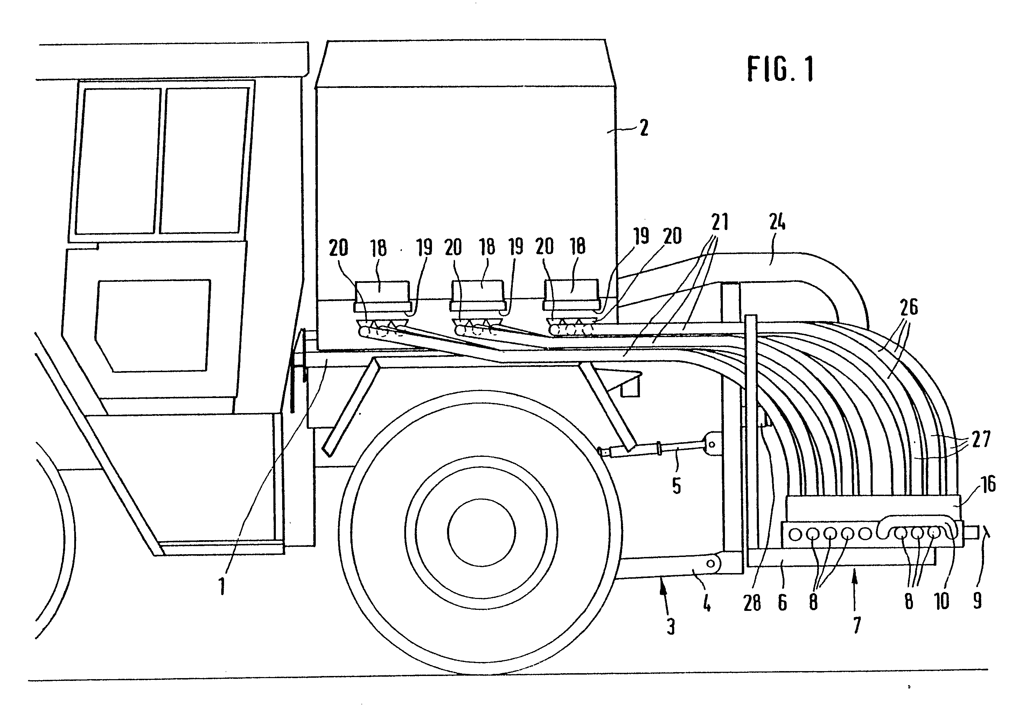

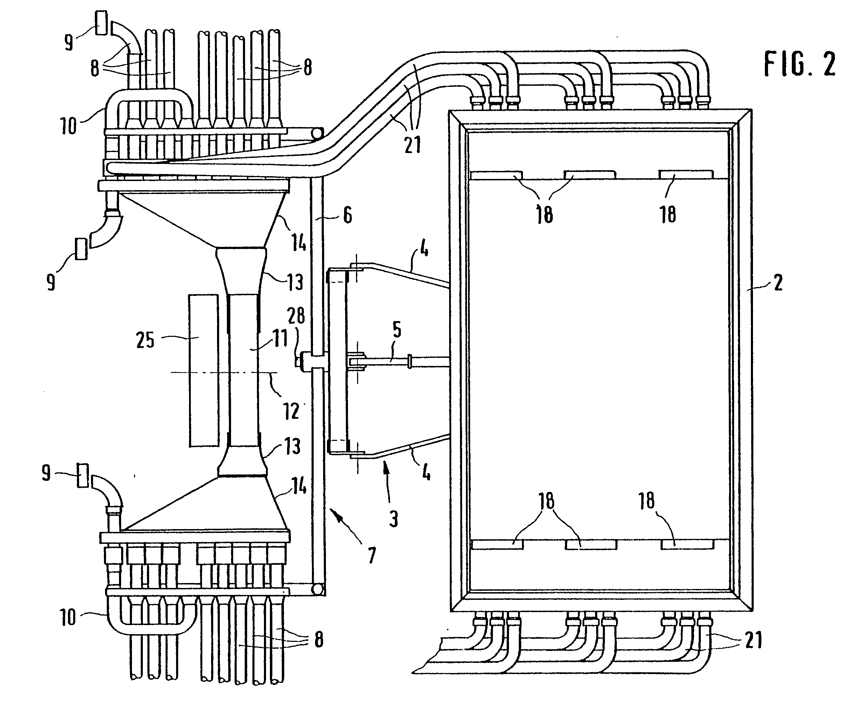

Jede Auffangschale 20 gehört einer Transportleitung 21 an, wobei die Anzahl der Transportleitungen der Anzahl der Streuleitungen 8 entspricht. Es sind also die Transportleitungen 21 jeder Behälterseite, wie aus Figuren 2 und 3 ersichtlich, den Streuleitungen 8 des Streuaggregates 7 an der entsprechenden Fahrzeugseite zugeordnet. Beim gezeigten Ausführungsbeispiel sind jedem Dosierorgan drei Transportleitungen zugeordnet, die demgemäß zu jeweils drei Streuleitungen führen. Die Transportleitungen weisen, wie Figur 3 zeigt, im Bereich der Auffangschalen 20 wiederum je einen Injektor 22 auf, wobei allen Injektoren ein Luftverteiler 23 vorgeschaltet ist, der über eine Luftleitung 24 an ein weiteres Gebläse 25 (siehe Figur 2) angeschlossen ist. Im übrigen sind die Transportleitungen 21 — beim gezeigten Ausführungsbeispiel jeweils zu dreien — zusammengefaßt und, wie Figur 1 zeigt, untereinander nach hinten zum Streuaggregat 7 geführt. Sie weisen dort einen den Niveauunterschied überbrückenden, nach unten gekrümmten Abschnitt 26 und daran anschließende senkrechte Abschnitte 27 auf, die dann in den Aufgabekasten 16 oberhalb der Injektoren 15 an den Streuleitungen 8 münden.

Das Gebläse 11 für die Streuleitungen 8 und das Gebläse 25 für die Transportleitungen 21 können auf einer gemeinsamen Achse 12 sitzen, so daß sie durch nur einen Kuppelvorgang an die Zapfwelle angeschlossen werden können. Dabei kann das Transportgebläse 25 geringere Leistung aufweisen als das Fördergebläse 11 und im übrigen saugseitig mit einer Drosselklappe ausgestattet sein, um die Luftleistung zu steuern.

Beim gezeigten Ausführungsbeispiel ist der Rahmen 6 des Streuaggregates 7 über ein in der Fahrzeuglängsachse angeordnetes Pendellager 28 an eine Traverse des Dreipunktgestänges 3 angeschlossen, so daß das gesamte Streuaggregat 7 um das Lager 28 pendeln kann. Ist für die Spätdüngung eine größere Hubhöhe des Streuaggregats erwünscht, als sie durch das Dreipunktgestänge 3 möglich ist, so kann zwischen dem Dreipunktgestänge 3 und dem Pendellager 28 ein weiteres Rahmenbauteil eingesetzt sein, das zusammen mit dem Rahmen 6 eine Art Hubgestell bildet, so daß der Rahmen 6 an diesem Bauteil höhenverschiebbar ist. Ferner können die Streuleitungen 8 jeder Fahrzeugseite gegenüber dem Rahmen 6 achsparallel schwenkbar sein, um bei hängigem Gelände eine unterschiedliche Neigung der Streuleitungen an beiden Fahrzeugseiten zu ermöglichen.

Statt der gezeigten Anordnung der Auslauföffnungen 17 des Vorratsbehälters 2 im Bereich dessen seitlicher Begrenzung, die eine dachförmige Ausbildung des Bodens 29 (siehe Fig. 3) des Behälters erfordert, können die Dosierorgane 19 auch quer zur Fahrzeuglängsachse beispielsweise in der Quermittelachse oder aber auch im Bereich der Rückwand des Vorratsbehälters 2 hintereinander angeordnet sein, wobei dann die Transportleitungen 21 die seitliche Begrenzung des Vorratsbehälters nicht überragen, sondern nach hinten herausgeführt sind. Dadurch läßt sich der Vorratsbehälter 2 ohne Überschreitung der zulässigen Breite zur Seite hin vergrößern und es wird das Streugut in den Transportleitungen 21 nur einmal über die gekrümmten Abschnitte 26 umgelenkt. Im übrigen bestehen die Transportleitungen 21 vorzugsweise aus einem flexiblen Material, z. B. Gummiwerkstoffen, Kunststoff oder dgl.

Die Dosierorgane 18 werden vorzugsweise hydraulisch angetrieben und von dem Hydrauliknetz des Systemschleppers versorgt, wodurch eine leichte Drehzahlregelung und damit eine sehr genaue Dosierung möglich ist, die vor allem unabhängig von dem sonstigen Fahrzeugantrieb ist.

Die Transportleitungen 21 können — ggf. zusammen mit den Injektoren 22 mit Auffangschalen 20 — zu einer Baueinheit zusammengefaßt sein. Sie sind ferner leicht lösbar am Aufgabekasten 16 angebracht, so daß sich diese Baueinheit ohne Schwierigkeiten lösen läßt. Ebenso ist die Luftleitung 24 (bzw. die Luftleitungen) am Gebläse 25 und/oder an den Luftverteilern 23 lösbar angebracht, so daß das gesamte Streuaggregat ohne Schwierigkeiten von dem Vorratsbehälter 2 bzw. den Transportleitungen 21 getrennt und ebenso problemlos hieran angeschlossen werden kann.

Für die Spätdüngung bei sehr hohem Pflanzenwuchs kann zwischen Dreipunktgestänge 3 und Streuaggregat 7 ein Hubgestell eingesetzt sein, dessen führendes Teil am Dreipunktgestänge 3 sitzt. Das geführte Teil, das die Hub- und Senkbewegung durchführt, nimmt das Pendellager 28 mit dem Streuaggregat 7 auf. Die Gebläse 11, 25 hingegen sitzen vorzugsweise auf dem führenden Teil, so daß sie direkt an die Zapfwelle angekuppelt werden können. Der Hub zwischen Streuaggregat 7 einerseits und Vorratsbehälter 2 andererseits läßt sich ohne weiteres in den flexiblen Luftleitungen 13 bzw. 24 (Fig. 3) durch entsprechende Schleifen bzw. Krümmungen aufnehmen.

Der Vorratsbehälter 2 und das Steuaggregat 7 können in gleicher Weise auch in Verbindung mit einem Selbstfahrer oder auch einem Anhänger, sofern dieser entsprechende Ankupplungsmöglichkeiten mit Hubeinrichtungen besitzt, eingesetzt werden. Beim Aufsatteln auf einen Anhänger kann dieser mit einer Pflegebereifung (großer Durchmesser, schmale Breite) ausgestattet werden.

**Patentansprüche**

1. Vorrichtung zum Streuen von schüttfähigem Gut, insbesondere Dünger oder dgl., mit einem auf der Pritsche eines Fahrzeugs, z. B. eines Systemschleppers, eines Selbstfahrers oder eines Anhängers, aufgesattelten Vorratsbehälter (2) und einem von einem Hubgestänge, z. B. einem Dreipunktgestänge (3), aufgenommenen pneumatischen Streuaggregat (7), das mehrere sich beiderseits der Fahrzeuglängsachse und quer zu dieser erstreckende, außen mit unterschiedlichem Abstand von dieser an Verteilerorganen (9) ausmündende und in eine Fahrstellung anklappbare Streuleitungen (8) aufweist, die innen über je einen Injektor (15) und einen Luftverteiler (14) an wenigstens ein vom Fahrzeug, z. B. einer Zapfwelle, angetriebenes Gebläse (11) angeschlossen sind und denen das Streugut mittels Dosierorganen (18) zugeführt wird, dadurch gekennzeichnet, daß die Dosierorgane (18) unterhalb von am Vorratsbehälter (2) vorhandenen Auslauföffnungen (17) angeordnet sind und daß eine der Anzahl der Streuleitungen (8) entsprechende Anzahl von Transportleitungen (21) vorgesehen ist, die jeweils einerseits über einen Injektor (22) unterhalb der Dosierorgane (18) zur Aufnahme des Streugutes und über einen Luftverteiler (23) an ein Gebläse (25), andererseits an den Injektor (15) einer Streuleitung (8) angeschlossen sind, wobei den Streuleitungen (8) und den Transportleitungen (21) je ein eigenes Gebläse (11, 25) zugeordnet ist.

2. Vorrichtung nach Anspruch 1, dadurch gekennzeichnet, daß beide Gebläse (11, 25) eine gemeinsame Antriebswelle (12) aufweisen.

3. Vorrichtung nach Anspruch 1 oder 2, dadurch gekennzeichnet, daß beide Gebläse (11, 25) auf einem Rahmen (6) des Streugerätes (7) angeordnet und ihre gemeinsame Antriebswelle (12) an die Zapfwelle angeschlossen sind.

4. Vorrichtung nach einem der Ansprüche 1 bis 3, dadurch gekennzeichnet, daß das zweite Gebläse (25) druckseitig über wenigstens eine unterhalb des Vorratsbehälters (2) geführte Luftleitung (24) an die Luftverteiler (23) für die Transportleitungen (21) angeschlossen ist.

5. Vorrichtung nach einem der Ansprüche 1 bis 4, dadurch gekennzeichnet, daß das zweite Gebläse (25) saugseitig mittels einer Drosselklappe steuerbar ist.

6. Vorrichtung nach einem der Ansprüche 1 bis 5, dadurch gekennzeichnet, daß das gesamte Streuaggregat gegenüber der Hubeinrichtung an einer in Fahrtrichtung liegenden Achse pendelnd aufgehängt ist.

7. Vorrichtung nach einem der Ansprüche 1 bis 6, dadurch gekennzeichnet, daß der Rahmen (6) des Streuaggregats (7) den heb- und senkbaren Teil eines Hubgestells bildet, dessen anderes Teil mit dem Dreipunktgestänge (3) verbunden ist.

8. Vorrichtung nach einem der Ansprüche 1 bis 7, dadurch gekennzeichnet, daß bei Anordnung wenigstens eines der beiden Gebläse (11, 25) auf dem den heb- und senkbaren Teil des Hubgestells bildenden Rahmen (6) die Antriebswelle (12) dieses Gebläses mit der Zapfwelle über ein längenveränderliches Getriebeteil, z. B. einen mittels seitlichen Federdrucks verkürzbaren Riemenantrieb, verbunden ist.

9. Vorrichtung nach einem der Ansprüche 1 bis 7, dadurch gekennzeichnet, daß das bzw. die Gebläse (11, 25) auf dem mit dem Dreipunktgestänge (3) verbundenen Teil des Hubgestells angeordnet und über flexible Luftleitungen (13, 24) mit den Luftverteilern (23) unter dem Vorratsbehälter (2) bzw. den Luftverteilern (14) an dem Streuaggregat (7) verbunden sind.

10. Vorrichtung nach einem der Ansprüche 1 bis 9, dadurch gekennzeichnet, daß der Rahmen (6) des Streuaggregats (7) bzw. das mit dem Dreipunktgestänge verbundene Teil des Hubgerüstes über ein etwa in der Fahrzeuglängsachse angeordnetes Pendellager (28) mit dem Dreipunktgestänge (3) verbunden ist.

11. Vorrichtung nach einem der Ansprüche 1 bis 9, dadurch gekennzeichnet, daß die Streuleitungen (8) jeweils einer Fahrzeugseite, gegebenenfalls zusammen mit weiteren ihnen zugeordneten Bauteilen, um eine parallel zur Fahrzeuglängsachse verlaufende Achse einstellbar sind.

12. Vorrichtung nach einem der Ansprüche 1 bis 11, dadurch gekennzeichnet, daß die Transportleitungen (21) zusammen mit den Injektoren (22) unterhalb des Vorratsbehälters (2) eine Baueinheit bilden, die mit dem Vorratsbehälter (2) und/oder mit dem Streuaggregat (7) leicht lösbar verbunden ist.

13. Vorrichtung nach einem der Ansprüche 1 bis 12, dadurch gekennzeichnet, daß die Luftleitung (24) zwischen dem Gebläse (25) und den Luftverteilern (23) unterhalb des Vorratsbehälters (2) mit dem Gebläse (25) lösbar verbunden ist.

14. Vorrichtung nach einem der Ansprüche 1 bis 13, dadurch gekennzeichnet, daß der Vorratsbehälter (2) beiderseits der Fahrzeuglängsachse je eine parallel zu dieser verlaufende Auslauföffnung (17) aufweist und darunter jeweils eine Gruppe von Dosierorganen (18) angeordnet ist, die über die Transportleitungen (21) den Streuleitungen (8) jeweils einer Fahrzeugseite zugeordnet sind.

15. Vorrichtung nach Anspruch 14, dadurch gekennzeichnet, daß die Transportleitungen (21) in Förderrichtung unmittelbar hinter den Injektoren (23) über gekrümmte Abschnitte in die Flucht hinter dem Vorratsbehälter (2) zu den dort angeordneten Injektoren (15) der Streuleitungen (8) geführt sind.

16. Vorrichtung nach einem der Ansprüche 1 bis 13, dadurch gekennzeichnet, daß der Vorratsbehälter (2) eine einzige quer zur Fahrzeuglängsachse verlaufende Auslauföffnung aufweist, unterhalb der sämtliche Dosierorgane (18) hintereinander und quer zur Fahrzeuglängsachse angeordnet sind und daß die zu einer Fahrzeugseite hin angeordneten Dosierorgane (18) jeweils den zur gleichen Fahrzeugseite angeordneten Streuleitungen (8) zugeordnet sind.

17. Vorrichtung nach einem der Ansprüche 1 bis 16, dadurch gekennzeichnet, daß die Transportleitungen (21) aus flexiblen Schläuchen gebildet sind.

18. Vorrichtung nach einem der Ansprüche 1 bis 17, dadurch gekennzeichnet, daß der Vorratsbehälter (2), die Dosierorgane (18), die Luftverteiler (23) mit den Injektoren (22) und die Transportleitungen (21) eine Baueinheit bilden.

19. Vorrichtung nach einem der Ansprüche 1 bis 18, dadurch gekennzeichnet, daß das Streuaggregat (7) mit den Gebläsen (24, 25), dem Hubgestell und der Pendelachse (28) eine Baueinheit bilden.

## Claims

1. Spreader for bulk material, particularly fertilizer or the like, with a storage container (2) saddled onto the platform of a vehicle, e. g. a system tractor, an automotive vehicle, or a trailer and a pneumatic spreader unit (7) received by a lifting linkage, e. g. a three-point linkage (3), which has several spreader lines (8) extending on either side of the vehicle longitudinal axis and at right angles thereto, externally issuing with differing spacing therefrom on distributor members (9) and which can be tilted into a travel position, said spreader lines being internally connected by means of in each case one injector (15) and an air distributor (14) to at least one blower (11) driven by the vehicle, e. g. a power take-off shaft and to which the spreading material is supplied by means of dosing members (18), characterized in that the dosing members (18) are positioned below outlet opening (17) on the storage container (2) and that a number of transport lines (21) corresponding to the number of spreader lines (8) is provided, which are on the one hand connected by means of an injector (22) below the dosing members (18) for receiving the spreading material and via an air distributor (23) to a blower (25) and on the other hand to the injector (15) of a spreader line (8), a separate blower (11, 25) being associated with each of the spreader lines (8) and transport lines (21).

2. Spreader according to claim 1, characterized in that both blowers (11, 25) have a common driving shaft (12).

3. Spreader according to claims 1 or 2, characterized in that both blowers (11, 25) are positioned on a frame (6) of the spreader unit (7) and their common driving shaft (12) is connected to the power take-off shaft.

4. Spreader according to one of the claims 1 to 3, characterized in that the second blower (25) is connected on the pressure side via at least one air line (24) guided below the storage container (2) to the air distributor (23) for the transport lines (21).

5. Spreader according to one of the claims 1 to 4, characterized in that the second blower (25) is controllable on the suction side by means of a throttle valve.

6. Spreader according to one of the claims 1 to 5, characterized in that the overall spreader unit is suspended in self-aligning manner on a shaft located in the direction of travel with respect to the lifting means.

7. Spreader according to one of the claims 1 to 6, characterized in that the frame (6) of the spreader unit (7) forms the raisable and lowerable part of a lifting frame, whose other part is connected to the three-point linkage (3).

8. Spreader according to one of the claims 1 to 7, characterized in that in the case of the arrangement of at least one of the two blowers (11, 25) on the raisable and lowerable part of the frame (6) forming the lifting frame, the driving shaft (12) of said blower is connected to the power take-off shaft via a length-variable gear part, e. g. a belt drive which can be shortened by means of lateral spring tension.

9. Spreader according to one of the claims 1 to 7, characterized in that the blower or blowers (11, 25) are arranged on the part of the lifting frame connected to the three-point linkage (3) and are connected by means of flexible air lines (13, 24) to the air distributors (23) under the storage container (2) or the air distributors (14) on the spreader unit (7).

10. Spreader according to one of the claims 1 to 9, characterized in that the frame (6) of the spreader unit (7) or the part of the lifting frame connected to the three-point linkage is connected by means of a self-aligning bearing (28) located roughly in the vehicle longitudinal axis to the three-point linkage (3).

11. Spreader according to one of the claims 1 to 9, characterized in that the spreader lines of in each case one vehicle side, optionally together with further components associated therewith, are adjustable about an axis parallel to the vehicle longitudinal axis.

12. Spreader according to one of the claims 1 to 11, characterized in that the transport lines (21), together with the injectors (22) below the storage container (2) form a standard component, which is easily detachably connected with the storage container (2) and/or with the spreader unit (7).

13. Spreader according to one of the claims 1 to 12, characterized in that the air line (24) between the blower (25) and the air distributors (23) is detachably connected to blower (25) below the storage container (2).

14. Spreader according to one of the claims 1 to 13, characterized in that on either side of the vehicle longitudinal axis, the storage container (2) has in each case an outlet opening (17) running parallel thereto and beneath the same is in each case provided a group of dosing members (18), which by means of the transport lines (21) are associated with the spreader lines (8) of one vehicle side in each case.

15. Spreader according to claim 14, characterized in that the transport lines (21) are guided in the feed direction immediately behind the injectors (23), via curved portions in alignment behind the storage container (2) to the injectors (15) of spreader lines (8) positioned there.

16. Spreader according to one of the claims 1 to 13, characterized in that the storage container (2) has a single outlet opening at right angles to the vehicle longitudinal axis below which all the dosing members (18) are arranged successively and at right angles to the vehicle longitudinal axis and that the dosing members (18) located on one vehicle side are in each case associated with the spreader lines (8) arranged on the same vehicle side.

17. Spreader according to one of the claims 1 to 16, characterized in that the transport lines (21) are constituted by flexible hoses.

18. Spreader according to one of the claims 1 to 17, characterized in that the storage container (2), dosing members (18), air distributors (23) with injectors (22) and transport lines (21) form a standard component.

19. Spreader according to one of the claims 1 to 18, characterized in that the spreader unit (7) with the blowers (24, 25), the lifting frame and the self-aligning bearing (28) form a standard component.

## Revendications

1. Dispositif pour épandre des substances en vrac, notamment des engrais ou l'analogue, comportant un réservoir (2) porté sur la plate-forme d'un véhicule, par exemple un tracteur porte-outils, d'un châssis automoteur ou d'une remorque, et un groupe d'épandage (7) pneumatique tenu par un attelage de relevage, par exemple un attelage trois points (3), qui comporte plusieurs canalisations d'épandage (8) pouvant être rabattues dans une position de route du véhicule, s'étendant de chaque côté de l'axe longitudinal du véhicule et transversalement à celui-ci et débouchant sur des organes de distribution (9) à des distances variables de cet axe, lesquelles canalisations sont respectivement raccordées par un injecteur (15) et un diffuseur d'air (14) à au moins un ventilateur (11) entraîné par le véhicule, par exemple par une prise de force, et auxquelles le produit à épandre est amené au moyen d'organes de dosage (18), caractérisé en ce que les organes de dosage (18) sont disposés en dessous d'orifices de décharge (17) se trouvant sur le réservoir (2) et en ce qu'on prévoit un nombre de canalisations de transport (21) correspondant au nombre des canalisations d'épandage (8), lesquelles canalisations de transport sont raccordées, d'une part par l'intermédiaire d'un injecteur respectif (22) disposé en dessous des organes doseurs (18) pour recevoir le produit à épandre et par l'intermédiaire d'un diffuseur d'air (23) à un ventilateur (25), d'autre part à l'injecteur (15) d'une canalisation d'épandage (8), un ventilateur particulier (11, 25) étant associé respectivement aux canalisations d'épandage (8) et aux canalisations de transport (21).

2. Dispositif selon la revendication 1, caractérisé en ce que les deux ventilateurs (11, 25) sont montés sur un arbre d'entraînement commun (12).

3. Dispositif selon la revendication 1 ou 2, caractérisé en ce que les deux ventilateurs (11, 25) sont disposés sur un cadre (6) du groupe d'épandage (7) et leur arbre d'entraînement commun (12) est raccordé à la prise de force.

4. Dispositif selon l'une des revendications 1 à 3, caractérisé en ce que le deuxième ventilateur (25) est raccordé aux diffuseurs d'air (23) pour les canalisations de transport (21) du côté refoulement par l'intermédiaire d'au moins une canalisation d'air (24) passant en dessous du réservoir (2).

5. Dispositif selon l'une des revendications 1 à 4, caractérisé en ce que le deuxième ventilateur (25) peut être réglé du côté aspiration au moyen d'une vanne de réglage.

6. Dispositif selon l'une des revendications 1 à 5, caractérisé en ce que l'ensemble du groupe d'épandage est suspendu comme un pendule, par rapport au dispositif de relevage, sur un axe situé dans le sens de la marche.

7. Dispositif selon l'une des revendications 1 à 6, caractérisé en ce que le cadre (6) du groupe d'épandage (7) constitue la partie pouvant monter et descendre d'un bâti de relevage, dont l'autre partie est reliée à l'attelage trois points (3).

8. Dispositif selon l'une des revendications 1 à 7, caractérisé en ce que, lorsqu'au moins un des deux ventilateurs (11, 25) est placé sur le cadre (6) constituant la partie du bâti de relevage pouvant monter et descendre, l'arbre d'entraînement (12) de ce ventilateur est relié à la prise de force par l'intermédiaire d'un élément de transmission à longueur variable, par exemple une courroie pouvant être raccourcie au moyen de la pression latérale d'un ressort.

9. Dispositif selon l'une des revendications 1 à 7, caractérisé en ce que le ou les ventilateurs (11, 25) sont disposés sur la partie du bâti de relevage reliée à l'attelage trois points (3) et sont reliés par l'intermédiaire de canalisations d'air flexibles (13, 24) aux diffuseurs d'air (23) sous le réservoir (2) et aux diffuseurs d'air (14) sur le groupe d'épandage (7).

10. Dispositif selon l'une des revendications 1 à 9, caractérisé en ce que le cadre (6) du groupe d'épandage (7) ou la partie du bâti de relevage reliée à l'attelage trois points, est reliée à l'attelage trois points (3) par l'intermédiaire d'un palier pendulaire (28) disposé sensiblement dans l'axe longitudinal du véhicule.

11. Dispositif selon l'une des revendications 1 à 9, caractérisé en ce que les canalisations d'épandage (8) respectivement d'un côté du véhicule, éventuellement avec d'autres composants qui leur sont associés, peuvent être réglées autour d'un axe s'étendant parallèlement à l'axe longitudinal du véhicule.

12. Dispositif selon l'une des revendications 1 à 11, caractérisé en ce que les canalisations de transport (21) avec les injecteurs (22) sous le réservoir (2) constituent une unité modulaire qui est reliée de façon facilement amovible avec le réservoir (2) et/ou avec le groupe d'épandage (7).

13. Dispositif selon l'une des revendications 1 à 12, caractérisé en ce que la canalisation d'air (24) entre le ventilateur (25) et les diffuseurs d'air (23) en dessous du réservoir (2) est reliée de façon amovible à ce ventilateur (25).

14. Dispositif selon l'une des revendications 1 à 13, caractérisé en ce que le réservoir (2) comporte de chaque côté de l'axe longitudinal du véhicule une ouverture de décharge (17) s'étendant parallèlement à cet axe, en dessous de laquelle est disposé chaque fois un groupe d'organes doseurs (18) qui sont associés par les canalisations de transport (21) aux canalisations d'épandage (8) respectivement d'un côté du véhicule.

15. Dispositif selon la revendication 14, caractérisé en ce que les canalisations de transport (21) sont, immédiatement derrière les injecteurs (23) dans le sens de refoulement, amenées par l'intermédiaire de portions incurvées, dans l'alignement derrière le réservoir (2), jusqu'aux injecteurs (15) des canalisations d'épandage (8) qui y sont disposés.

16. Dispositif selon l'une des revendications 1 à 13, caractérisé en ce que le réservoir (2) comporte une seule ouverture de décharge s'étendant transversalement à l'axe longitudinal du véhicule, sous laquelle tous les organes doseurs (18) sont disposés l'un derrière l'autre et transversalement à l'axe longitudinal du véhicule et en ce que les organes doseurs (18) disposés en direction d'un côté du véhicule sont respectivement associés aux canalisations d'épandage (8) disposées du même côté du véhicule.

17. Dispositif selon l'une des revendications 1 à 16, caractérisé en ce que les canalisations de transport (21) sont formées par des tuyaux flexibles.

18. Dispositif selon l'une des revendications 1 à 17, caractérisé en ce que le réservoir (2), les organes doseurs (18), les diffuseurs d'air (23) avec les injecteurs (22) et les canalisations de transport (21) forment une unité.

19. Dispositif selon l'une des revendications 1 à 18, caractérisé en ce que le groupe d'épandage (7) forme une unité modulaire avec le ventilateur (24, 25), le bâti de relevage et l'axe pendulaire (28).

FIG. 1

# FIG. 2

# FIG. 3